# EUROPÄISCHE PATENTSCHRIFT

(11) **EP 3 583 332 B1**
(45) Veröffentlichungstag und Bekanntmachung des Hinweises auf die Patenterteilung: **04.08.2021**
(21) Anmeldenummer: 18705563.7
(22) Anmeldetag: 06.02.2018
(51) Int. Cl.: F16H 57/04

(54) **SCHMIERMITTEL- UND ÖL-KÜHL-VORRICHTUNG**
LUBRICATING/OIL-COOLING DEVICE
DISPOSITIF D'ALIMENTATION EN LUBRIFIANT OU DE REFROIDISSEMENT PAR HUILE

(30) Priorität: 15.02.2017 DE 102017202389
(43) Veröffentlichungstag der Anmeldung: 25.12.2019
(73) Patentinhaber: POLYTEC PLASTICS Germany GmbH & Co. KG, 49393 Lohne (DE)
(72) Erfinder: ESDERS, Helen, 49393 Lohne (DE); JANSSEN, Hans, 49413 Dinklage (DE); THIESEN, Uwe, 49413 Dinklage (DE); KASIMOV, Timur, 89250 Senden (DE)
(74) Vertreter: dompatent von Kreisler Selting Werner - Partnerschaft von Patent- und Rechtsanwälten mbB
(86) Internationale Anmeldenummer: PCT/EP2018/052870
(87) Internationale Veröffentlichungsnummer: WO 2018/149688

(56) Entgegenhaltungen:
- CN-A- 101 487 529
- DE-A1- 10 318 070
- DE-A1-102010 033 480
- DE-A1-102012 109 133

## Beschreibung

Gegenstand der Erfindung ist eine Vorrichtung zur Versorgung eines Getriebes mit einem Schmiermittel oder zur Öl-Kühlung eines Kolbens im Motor eines Kraftfahrzeuges umfassend ein Schmiermittel- oder Ölverteilerrohr mit wenigstens einem davon abzweigenden Spritzrohr zur Förderung des Schmiermittels oder des Öls an die jeweiligen Komponenten des Getriebes oder des Motors und ein Verfahren zu dessen Herstellung.

In Motoren und Getrieben von PKW müssen die Zahnräder oder Kolben mit Öl geschmiert werden. Die Schmierung ist dann optimal, wenn ein kleiner Ölstrahl direkt vor den Kontaktbereich zweier Zahnräder oder auf den Kolben auftrifft und den Getriebeeingriffsbereich mit Öl benetzt. Desgleichen werden Kolben im Motor Öl gekühlt. Dafür ist es erforderlich dass Öl zu jedem Zylinder geführt und über eine Düse Öl eingespritzt wird.

Diese Ölverteilerrohre mit Düsen sind komplexe Konstruktionen und werden in der Regel aus mehreren Einzelteilen zusammengefügt.

DE 103 18 070 A1 beschreibt eine Vorrichtung und Verfahren zur Schmierung und Kühlung von Zahnradgetrieben, mit einer Zuführungsleitung zur Zuführung von Schmier- und Kühlöl aus einem Ölsumpf in einen mit der Zuführungsleitung verbundenen ersten in einem Spritzrohr angeordneten Kanal der mit mindestens einer ersten Düse zum gezielten Spritzen des Schmier- und Kühlöls in dem ersten Kanal zugeordneten schmierungsintensiven Bereichen des Getriebes verbunden ist, wobei die Zuführungsleitung mit mindestens einem zweiten Kanal und mindestens einer mit dem zweiten Kanal in Verbindung stehenden zweiten Düse zum gezielten Spritzen in dem zweiten Kanal zugeordneten schmierungsintensiven Bereichen verbunden ist, und wobei ein Steuerventil vorgesehen ist, über das die Kanäle schaltbar sind.

Aus DE 10 2010 033 480 A1 ist eine Vorrichtung und ein Verfahren zur Versorgung eines Getriebes mit Schmiermittel bekannt. Um die Ölschmierung von Getrieben, insbesondere Doppelkupplungsgetrieben mit zwei Teilgetrieben, zu verbessern, wird vorgeschlagen, dass die Vorrichtung das Schmiermittel nur an die Komponenten, die die jeweils lastführende Gangstufe bilden, beziehungsweise das lastführende Teilgetriebe fördert. Insbesondere wird hier ein System von Rohren, beispielsweise aus Stahlrohren mit kleinen angeformten Düsen, die in eine Kunststoffaufnahme eingespritzt sind, zusammengefügt. Mehrere solcher Kunststoff-Metallmodule werden dann zu einen Rohrsystem zusammengesteckt und verklippst. Ein solches Rohrsystem besteht damit aus 5 bis 10 Einzelteilen. Die Rohre müssen einzeln hergestellt und umgeformt werden. Die Rohre müssen zu kleinen Rohrpakten zusammengespritzt werden. Die Rohrpakete werden in einem dritten Schritt zu einem Gesamtmodul zusammengefügt. Es werden umgeformte Metallröhrchen verwendet um die Düsen zu formen.

Die Aufgabe der vorliegenden Erfindung besteht demgegenüber darin, Beölungssysteme bereitzustellen, die einfach aufgebaut sind. Die Herstellung soll dabei möglichst automatisiert erfolgen und die Bauteile vorzugsweise aus Kunststoff hergestellt und damit leicht sein.

Die vorgenannte Aufgabe wird in einer ersten Ausführungsform gelöst durch ein Vorrichtung zur Versorgung eines Getriebes mit einem Schmiermittel oder zur Öl-Kühlung eines Kolbens im Motor eines Kraftfahrzeuges umfassend ein Schmiermittel- oder Ölverteilerrohr 1 mit wenigstens einem davon abzweigenden Spritzrohr 2a, 2b, 2c zur Förderung des Schmiermittels oder des Öls an die jeweiligen Komponenten des Getriebes oder des Motors,
das dadurch gekennzeichnet ist, dass das Spritzrohr 2a, 2b, 2c zwei Halbschalen umfasst, die im Bereich der Kontaktflächen der Fügenaht zwischen den Halbschalen 3a, 3b, 3c, 3d, 3e, 3f, 4a, 4b, 4c, 4d, 4e, 4f stoffschlüssig verbunden sind.

Gegenüber dem Stand der Technik wird ein Rohrsystem welches aus wenigstens aus einem, insbesondere aber aus einer Vielzahl von kleinen im Raum verlaufenden Rohren 2a, 2b, 2c besteht und keine Metall/Kunststoffverbindung benötigt durch ein einfach herstellbares, insbesondere Kunststoff Rohrsystem ersetzt, welches einteilig durch Spritzen zusammengefügt oder verschweißt wird.

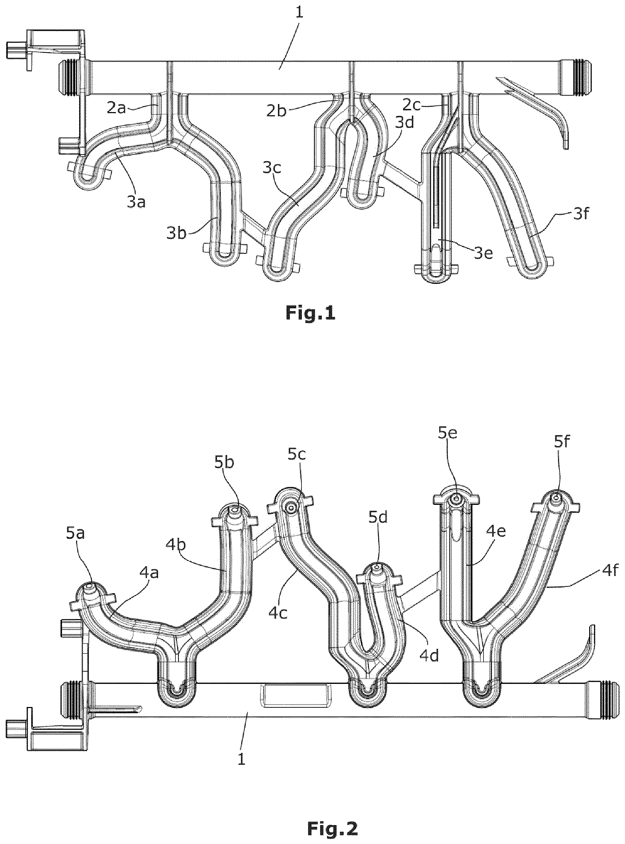

Fig. 1 zeigt eine erfindungsgemäße Vorrichtung zur Versorgung eines Getriebes mit einem Schmiermittel oder zur Öl-Kühlung eines Kolbens im Motor eines Kraftfahrzeuges mit einem Schmiermittel-oder Ölverteilerrohr 1. Von dem Schmiermittel-oder Ölverteilerrohr 1 zweigen drei Spritzrohre 2a, 2b, 2c ab, die jeweils in Verzweigungen münden. Die hier dargestellten Halbschalen 3a, 3b, 3c, 3d, 3e, 3f bilden die Unterseite der Spritzrohre 2a, 2b, 2c.

In der Fig. 2 wird die Draufsicht auf die erfindungsgemäße Vorrichtung dargestellt. Insbesondere sind hier die oberen Halbschalen 4a, 4b, 4c, 4d, 4e, 4f dargestellt, die jeweils in ihrem Ende mit den Düsen 5a, 5b, 5c, 5d, 5e, 5f versehen sind.

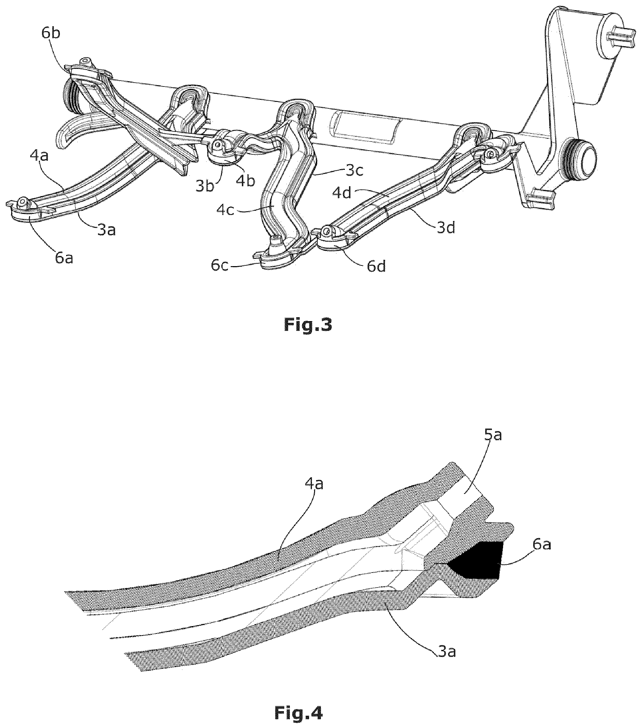

In der Fig. 3 wird das Fügematerial 6a, 6b, 6, 6d hervorgehoben, dass die untere Halbschalen 3a, 3b, 3c, 3d, 3e, 3f mit den oberen Halbschalen 4a, 4b, 4c, 4d, 4e, 4f verbindet.

In der Fig. 4 wird die in das Spritzrohr 2a integrierte Düse 5a dargestellt, ebenso wie das Fügematerial 6a, 6b, 6c, 6d das die untere Halbschale 3a mit der oberen Halbschale 4a verbindet.

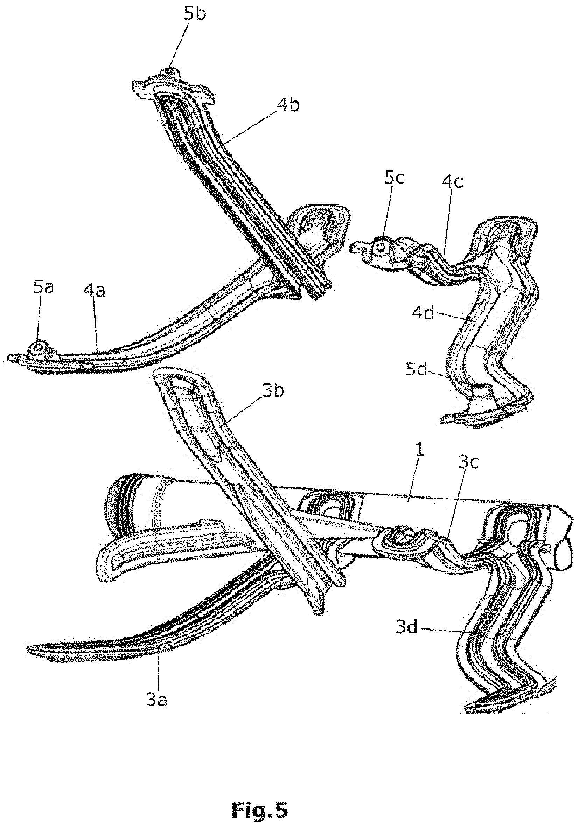

In der Fig. 5 sind die unteren Halbschalen 3a, 3b, 3c, 3d von den oberen Halbschalen 4a, 4b, 4c, 4d getrennt voneinander dargestellt. Diese Schalen werden unabhängig voneinander hergestellt, beispielsweise durch Spritzguß und nachfolgend durch Verschweißen oder mittels eines Fügematerials 6a, 6b, 6c 6d (nicht dargestellt) verbunden.

Wenn in der Beschreibung der vorliegenden Erfindung von einem Spritzrohr 2a die Rede ist, so ist dieser Begriff dahingehend zu verstehen, das auch mehrere Spritzrohre 2a, 2b, 2cumfasst sein können. Die Spritzrohre bestehen aus mindestens zwei Halbschalen 3a, 3b, 3c, 3d, 3e,3f, 4a, 4b, 4c, 4d, 4e, 4f, welche durch eine dritte Komponente zu einen geschlossenen Rohrsystem zusammen gespritzt werden.

Die Rohrhälften können in einem Werkzeug zusammengefasst werden. Nach dem Spritzen werden die Konturplatten des Werkzeuges so verschoben oder gedreht, dass die obere 4a, 4b, 4c, 4d und die untere Halbschale3a, 3b, 3c, 3d, 3e, 3f so übereinander liegen, dass diese zusammen ein geschlossenes Rohr bilden.

In einen zweiten Spritzprozess werden die beiden Halbschalen 3a, 3b, 3c, 3d, 3e, 3f, 4a, 4b, 4c, 4d, 4e, 4f dann durch Ausspritzen der Fügenaht so verspritzt, dass die Kontaktflächen der beiden Halbschalen mit dem jetzt eingespritzten Fügematerial 6a, 6b, 6c, 6d aufgeschmolzen werden und dadurch die beiden Halbschalen 3a, 3b, 3c, 3d, 3e, 3f, 4a, 4b, 4c, 4d, 4e, 4f durch das Fügematerial 6a, 6b, 6c, 6d stoffschlüssig verbunden werden.

Die Umspritzung stellt durch Anschmelzen der Oberflächen von Rohrober- und Unterteil eine Verbindung zwischen den Halbschalen 3a, 3b, 3c, 3d, 3e, 3f, 4a, 4b, 4c, 4d, 4e, 4f her. Damit in das Rohrinnere keine Schmelze eindringt, sollten die beiden Halbschalen 3a, 3b, 3c, 3d,3e, 3f, 4a, 4b, 4c, 4d, 4e, 4f so an Dichtflächen gegeneinander gedrückt werden, dass die umspritzte Komponente keine Möglichkeit hat den Rohrinnenbereich zu erreichen. Damit entsteht ein aus mindestens zwei Halbschalen 3a, 3b, 3c, 3d, 3e, 3f, 4a, 4b, 4c, 4d, 4e, 4f bestehendes Spritzrohr 2a, 2b, 2c, welches innen offen ist und an der Fügefläche durch die Umspritzung gedichtet wurde.

Ein solches Rohrsystem kann auch aus mehr als zwei Halbschalen 3a, 3b, 3c, 3d, 3e, 3f, 4a, 4b, 4c, 4d, 4e, 4f bestehen zum Beispiel einem größeren Rohrunterteil auf dem mehrere kleinere Rohroberteile zu einem Gesamtsystem zusammengespritzt werden. Da die offenen Rohroberteile im Werkzeug zugänglich sind, ist es möglich hier die Öldüsen 5a, 5b, 5c, 5d, 5e, 5f direkt mit anzuformen.

Es kann auch auf ein durch Spritzguss hergestelltes Rohr 2a, 2b, 2c eine oder mehrere Abzweigung beziehungsweise Abzweigungen angespritzt werden, wobei die angespritzten Rohrelemente auch so ausgeführt sein können, dass sie selbst als einteiliges Spritzteil nicht herstellbar wären.

Alternativ zum Umspritzen ist es im Sinne der vorliegenden Erfindung auch möglich, ein solches Rohrsystem als Rohroberteil und -Unterteil zu spritzen und dann die Halbschalen 3a, 3b, 3c, 3d, 3e, 3f, 4a, 4b, 4c, 4d, 4e, 4f durch Schweißen, insbesondere Heißgasschweißen zu einem geschlossenen Spritzrohr 2a, 2b, 2c zu verbinden. Nachteilig wäre hier auftretender Schweißaustrieb und die Präzision des Spritzrohres 2a, 2b, 2c durch Schweißen nur mit geringerer Präzision herstellbar wäre.

Erfindungsgemäß lassen sich räumliche Spritzrohre 2a, 2b, 2c herstellen, die als Einzelteile in Spritzgusstechnik nicht herstellbar wären. So lässt sich beispielsweise ein Rohrleitungssystem mit Abzweigungen, Umlenkungen und Düsen 5a, 5b, 5c, 5d, 5e, 5f im Strömungsbereich herstellen. Das ganze Rohrsystem besteht vorzugsweise aus Kunststoff, insbesondere aus einem Thermoplasten. Die Halbschalen 3a, 3b, 3c, 3d, 3e, 3f, 4a, 4b, 4c, 4d, 4e, 4f können während des Fügeprozesses in der jeweiligen Werkzeughälfte/Werkzeugkavitäten verbleiben. Der Montagespritzguss erlaubt hohe Präzision des Fügens, der es auch erlaubt Röhrchen mit Innendurchmesser von kleiner als 3mm herzustellen.

Unter Komponenten für eine Gangstufe sind hier die Komponenten gemeint, die an der Drehmomentübertragung für eine entsprechende Übersetzung beteiligt sind, das heißt dass lastführende Radsatzpaar sowie die entsprechende Synchronisiereinrichtung, gegebenenfalls auch benachbarte Lager.

In Übereinstimmung mit dem eingangs referierten Stand der Technik wird vorgeschlagen, dass bei der Ölschmierung von Getrieben, insbesondere Doppelkupplungsgetrieben mit zwei Teilgetrieben, nur noch der jeweils lastführende Gang beziehungsweise der jeweilige Radsatz geschmiert wird. Auf diese Weise werden Quetschverluste bei den anderen Radsätzen des gleichen oder vorzugsweise bei einem Doppelkupplungsgetriebe des anderen Teilgetriebes vermieden.

Nach einer bevorzugten Ausführungsform wird das Schmiermittel nur den Gangstufen, das heißt dann allen Gangstufen eines Teilgetriebes, der lasttragenden Triebwelle zugeführt. Diese Ausführungsform weist den Vorteil auf, dass mit weniger großem konstruktivem Aufwand im Vergleich zu der Schmiermittelzufuhr zu jeder Gangstufe noch ausreichend hoch Plansch- und Quetschverluste verhindert werden. Das Schmieröl wird nur zu den Bereichen des Getriebes gebracht, wo es benötigt wird, nämlich dem Teilgetriebe, das gerade das Drehmoment überträgt. Auf diese Weise wird das Schmiermittel kontrolliert zugegeben. Im Vergleich mit der gleichzeitigen Versorgung beider Teilgetriebe mit Schmieröl wird insgesamt weniger Schmiermittel benötigt, was auch einer Unterversorgung mit Öl vorbeugt, sollte es zu Ölmängelzuständen kommen.

Die erfindungsgemäße Vorrichtung umfasst vorzugsweise so viele Spritzrohre 2a, 2b, 2c, wie unabhängige Gangstufen oder Teilgetriebe versorgt werden. Diese Spritzrohre 2a, 2b, 2c werden dann unabhängig voneinander mit Schmiermittel beaufschlagt.

Nach einer bevorzugten Ausführungsform - hier zur Versorgung der beiden Teilgetriebe - umfasst die Schmiervorrichtung ein Einspritzrohr 1 in Form eines Trägerrohrs mit zwei Schmiermittelanschlüssen. Für eine Teilung weist das Trägerrohr 1 vorzugsweise eine Wand auf, über die das Trägerrohr 1 in zwei Ölräume getrennt ist.

Es ist somit ein Schmiermittel- oder Ölverteilerrohr 1 mit zwei Teilen gebildet, wobei der jeweilige Teil aus einer separaten Ölkammer beziehungsweise einem Teil des Schmiermittel- oder Ölverteilerrohrs 1 und einem separaten Ölanschluss besteht. Es ist auch vorstellbar, dass die Mittel zur Förderung des Schmiermittels nicht aus einem gemeinsamen, getrennten Schmiermittel- oder Ölverteilerrohr 1, gebildet sind, sondern separate unabhängige, Teile umfassen, die wahlweise mit Öl beaufschlagt werden.

Die Ölanschlüsse sind verbunden mit Ölleitungen (nicht dargestellt), die mit dem Kühlölkreislauf der hydraulischen Steuerung in Verbindung stehen und wechselweise mit Öl beaufschlagbar sind.

Um das Schmieröl bedarfsgerecht auf das jeweils lastführende beziehungsweise aktive Teilgetriebe geben zu können, kann ein Schaltelement vorgesehen sein. Somit wird erreicht, dass nur das jeweils lastführende Teilgetriebe mit Öl versorgt wird.

Besonders bevorzugt kann als Fügematerial ein Thermoplast, insbesondere ein gegebenfalls glasfaserverstärktes Material beispielsweisel Polyamid auch glasfaserverstärkt oder ein Polypropylensulfid auch glasfaserverstärkt eingesetzt werden. Gleiche Materialien können auch für das Schmiermittel-oder Ölverteilerrohr 1 eingesetzt werden.

Das Bauteil ist, wenn es aus Kunststoff besteht, leichter als ein Zusammenbau aus Metall und Kunststoff.

Die erfindungsgemäße Vorrichtung lässt sich mit einem einfachen Werkzeug vollautomatisch herstellen.

Es können Blenden oder Düsen in die Spritzrohre 2a, 2b, 2c eingespritzt werden.

Ein Teileverzug kann minimiert werden. Eine saubere und wirtschaftliche Fertigung ist möglich.

Eine weitere Ausführungsform der vorliegenden Erfindung besteht in einem Verfahren zur Herstellung der oben definierten Vorrichtung, das dadurch gekennzeichnet ist, dass man
ein Schmiermittel- oder Ölverteilerrohr mit wenigstens einer ersten Halbschale 3a, 3b, 3c, 3d, 3e, 3f eines davon abzweigenden Spritzrohr herstellt,
eine mit der ersten Halbschale 3a, 3b, 3c, 3d, 3e, 3f kongruenten zweite Halbschale 4, 4b, 4c, 4d, 4e, 4f herstellt und
den Bereich der Kontaktflächen der Fügenaht zwischen den beiden Halbschalen 3a, 3b, 3c, 3d, 3e, 3f, 4a, 4b, 4c, 4d, 4e, 4f stoffschlüssig verbindet.

Besonders bevorzugt werden die die Fügeflächen zwischen den Halbschalen 3a, 3b, 3c, 3d, 3e, 3f, 4a, 4b, 4c, 4d, 4e, 4f verschweißt, insbesondere Heißgas verschweißt. Alternativ dazu ist es möglich, die Halbschalen 3a, 3b, 3c, 3d, 3e, 3f, 4a, 4b, 4c, 4d, 4e, 4f durch Ausspritzen der der Fügenaht zwischen den Halbschalen 3a, 3b, 3c, 3d, 3e, 3f, 4a, 4b, 4c, 4d, 4e, 4f durch ein Fügematerial auszuspritzen.

### Bezugszeichenliste:

- 1: Schmiermittel- oder Ölverteilerrohr
- 2a, 2b, 2c,: Spritzrohr
- 3a, 3b, 3c, 3d, 3e, 3f: untere Halbschale
- 4a, 4b, 4c, 4d, 4e, 4f: obere Halbschale
- 5a, 5b, 5c, 5d, 5e, 5f: Düse
- 6a, 6b, 6c, 6d: Fügematerial

## Patentansprüche

1. Vorrichtung zur Versorgung eines Getriebes mit einem Schmiermittel oder zur Öl-Kühlung eines Kolbens im Motor eines Kraftfahrzeuges umfassend ein Schmiermittel- oder Ölverteilerrohr (1) mit wenigstens einem davon abzweigenden Spritzrohr (2a) zur Förderung des Schmiermittels oder des Öls an die jeweiligen Komponenten des Getriebes oder des Motors,
**dadurch gekennzeichnet, dass** das Spritzrohr (2a) zwei Halbschalen (3a, 3b, 3c, 3d, 3e, 3f, 4a, 4b, 4c, 4d, 4e, 4f) umfasst, die im Bereich der Kontaktflächen der Fügenaht zwischen den Halbschalen (3a, 3b, 3c, 3d, 3e, 3f, 4a, 4b, 4c, 4d, 4e, 4f) stoffschlüssig verbunden sind.

2. Vorrichtung nach Anspruch 1, **dadurch gekennzeichnet, dass** eine der Halbschalen(3a, 3b, 3c, 3d, 3e, 3f, 4a, 4b, 4c, 4d, 4e, 4f) integraler Bestandteil des Schmiermittel- oder Ölverteilerrohres (1) ist.

3. Vorrichtung nach Anspruch 1 oder 2, **dadurch gekennzeichnet, dass** die Halbschalen (3a, 3b, 3c, 3d, 3e, 3f, 4a, 4b, 4c, 4d, 4e, 4f) im Bereich der Kontaktflächen der Fügenaht zwischen den Halbschalen (3a, 3b, 3c, 3d, 3e, 3f, 4a, 4b, 4c, 4d, 4e, 4f) verschweißt sind.

4. Vorrichtung nach Anspruch 1, **dadurch gekennzeichnet, dass** die Halbschalen (3a, 3b, 3c, 3d, 3e, 3f, 4a, 4b, 4c, 4d, 4e, 4f) im Bereich der Kontaktflächen der Fügenaht zwischen den Halbschalen (3a, 3b, 3c, 3d, 3e, 3f, 4a, 4b, 4c, 4d, 4e, 4f) durch ein Fügematerial (6a, 6b, 6c, 6d) verbunden sind.

5. Vorrichtung nach Anspruch 4, **dadurch gekennzeichnet, dass** das Fügematerial (6a, 6b, 6c, 6d) einen Thermoplasten, insbesondere ein gegebenenfalls glasfaserverstärktes Polyamid oder ein Polypropylensulfid umfasst.

6. Vorrichtung nach einem der Ansprüche 1 bis 5, **dadurch gekennzeichnet, dass** das Schmiermittel- oder Ölverteilerrohr (1) und/ oder das Spritzrohr (2a) einen Thermoplasten aufweist, insbesondere ein gegebenenfalls glasfaserverstärktes Polyamid oder ein Polypropylensulfid umfasst.

7. Verfahren zur Herstellung einer Vorrichtung nach einem der Ansprüche 1 bis 6, **dadurch gekennzeichnet, dass** man
ein Schmiermittel- oder Ölverteilerrohr (1) mit wenigstens einer ersten Halbschale (3a, 3b, 3c, 3d, 3e, 3f)einem davon abzweigenden Spritzrohr herstellt,
eine mit der ersten Halbschale(3a, 3b, 3c, 3d, 3e, 3f) kongruenten zweite Halbschale (4a, 4b, 4c, 4d, 4e, 4f) herstellt und
den Bereich der Kontaktflächen der Fügenaht zwischen den beiden Halbschalen (3a, 3b, 3c, 3d, 3e, 3f, 4a, 4b, 4c, 4d, 4e, 4f) stoffschlüssig verbindet.

8. Verfahren nach Anspruch 7, **dadurch gekennzeichnet, dass** man die Fügeflächen zwischen den Halbschalen (3a, 3b, 3c, 3d, 3e, 3f, 4a, 4b, 4c, 4d, 4e, 4f) verschweißt, insbesondere Heißgas verschweißt.

9. Verfahren nach Anspruch 7, **dadurch gekennzeichnet, dass** man die Halbschalen (3a, 3b, 3c, 3d, 3e, 3f, 4a, 4b, 4c, 4d, 4e, 4f) durch Ausspritzen der der Fügenaht zwischen den Halbschalen (3a, 3b, 3c, 3d, 3e, 3f, 4a, 4b, 4c, 4d, 4e, 4f) durch ein Fügematerial ausspritzt.

## Claims

1. A device for supplying a lubricant to a gear, or for oil cooling a piston in the engine of a motor vehicle, comprising a lubricant or oil distributor pipe (1) having at least one spray pipe (2a) branching off therefrom for conveying said lubricant or oil to the respective components of the gear or engine,
**characterized in that** said spray pipe (2a) comprises two half shells (3a, 3b, 3c, 3d, 3e, 3f, 4a, 4b, 4c, 4d, 4e, 4f), which are permanently joined by material bonding in the region of the contact surfaces of the joining seam between the half shells (3a, 3b, 3c, 3d, 3e, 3f, 4a, 4b, 4c, 4d, 4e, 4f).

2. The device according to claim 1, **characterized in that** one of the half shells (3a, 3b, 3c, 3d, 3e, 3f, 4a, 4b, 4c, 4d, 4e, 4f) is an integral part of said lubricant or oil distributor pipe (1).

3. The device according to claim 1 or 2, **characterized in that** said half shells (3a, 3b, 3c, 3d, 3e, 3f, 4a, 4b, 4c, 4d, 4e, 4f) are welded together in the region of the contact surfaces of the joining seam between the half shells (3a, 3b, 3c, 3d, 3e, 3f, 4a, 4b, 4c, 4d, 4e, 4f).

4. The device according to claim 1, **characterized in that** said half shells (3a, 3b, 3c, 3d, 3e, 3f, 4a, 4b, 4c, 4d, 4e, 4f) are bonded together through a joining material (6a, 6b, 6c, 6d) in the region of the contact surfaces of the joining seam between the half shells (3a, 3b, 3c, 3d, 3e, 3f, 4a, 4b, 4c, 4d, 4e, 4f).

5. The device according to claim 4, **characterized in that** said joining material (6a, 6b, 6c, 6d) includes a thermoplast, especially an optionally glass-fiber reinforced polyamide, or a polypropylene sulfide.

6. The device according to any of claims 1 to 5, **characterized in that** said lubricant or oil distributor pipe (1) and/or said spray pipe (2a) includes a thermoplast, especially an optionally glass-fiber reinforced polyamide, or a polypropylene sulfide.

7. A process for producing a device according to any of claims 1 to 6, **characterized in that**
a lubricant or oil distributor pipe (1) including at least one first half shell (3a, 3b, 3c, 3d, 3e, 3f) and a spray pipe branching off therefrom is prepared;
a second half shell (4a, 4b, 4c, 4d, 4e, 4f), which is congruent with said first half shell (3a, 3b, 3c, 3d, 3e, 3f), is prepared, and the region of the contact surfaces of the joining seam between the two half shells (3a, 3b, 3c, 3d, 3e, 3f, 4a, 4b, 4c, 4d, 4e, 4f) is permanently bonded by material bonding.

8. The process according to claim 7, **characterized in that** the joining surfaces between the half shells (3a, 3b, 3c, 3d, 3e, 3f, 4a, 4b, 4c, 4d, 4e, 4f) are welded together, especially by hot-gas welding.

9. The process according to claim 7, **characterized in that** said half shells (3a, 3b, 3c, 3d, 3e, 3f, 4a, 4b, 4c, 4d, 4e, 4f) are sprayed out by spraying out the joining seam between the half shells (3a, 3b, 3c, 3d, 3e, 3f, 4a, 4b, 4c, 4d, 4e, 4f) through a joining material.

## Revendications

1. Dispositif pour alimenter un engrenage avec un lubrifiant ou pour refroidir à huile un piston dans le moteur d'un véhicule automobile, comprenant un tuyau de distribution de lubrifiant ou d'huile (1) ayant au moins un tuyau d'injection (2a) en bifurquant pour convoyer le lubrifiant ou l'huile aux composants respectifs de l'engrenage ou du moteur,
**caractérisé en ce que** ledit tuyau d'injection (2a) comprend deux demi-coques (3a, 3b, 3c, 3d, 3e, 3f, 4a, 4b, 4c, 4d, 4e, 4f), qui sont reliées par assemblage permanent dans la région des surfaces de contact du joint entre les demi-coques (3a, 3b, 3c, 3d, 3e, 3f, 4a, 4b, 4c, 4d, 4e, 4f).

2. Dispositif selon la revendication 1, **caractérisé en ce que** l'une des demi-coques (3a, 3b, 3c, 3d, 3e, 3f, 4a, 4b, 4c, 4d, 4e, 4f) est une partie intégrante du tuyau de distribution de lubrifiant ou d'huile (1).

3. Dispositif selon la revendication 1 ou 2, **caractérisé en ce que** les demi-coques (3a, 3b, 3c, 3d, 3e, 3f, 4a, 4b, 4c, 4d, 4e, 4f) sont soudées dans la région des surfaces de contact du joint entre les demi-coques (3a, 3b, 3c, 3d, 3e, 3f, 4a, 4b, 4c, 4d, 4e, 4f).

4. Dispositif selon la revendication 1, **caractérisé en ce que** les demi-coques (3a, 3b, 3c, 3d, 3e, 3f, 4a, 4b, 4c, 4d, 4e, 4f) sont reliées par l'intermédiaire d'un matériau de joint (6a, 6b, 6c, 6d) dans la région des surfaces de contact du joint entre les demi-coques (3a, 3b, 3c, 3d, 3e, 3f, 4a, 4b, 4c, 4d, 4e, 4f).

5. Dispositif selon la revendication 4, **caractérisé en ce que** ledit matériau de joint (6a, 6b, 6c, 6d) comprend un thermoplastique, notamment un polyamide éventuellement renforcé par des fibres de verre, ou un poly(sulfure de propylène).

6. Dispositif selon l'une quelconque des revendications 1 à 5, **caractérisé en ce que** ledit tuyau de distribution de lubrifiant ou d'huile (1) et/ou ledit tuyau d'injection (2a) comprend un thermoplastique, notamment un polyamide éventuellement renforcé par des fibres de verre, ou un poly(sulfure de propylène).

7. Procédé pour fabriquer un dispositif selon l'une quelconque des revendications 1 à 6, **caractérisé en ce que** l'on
prépare un tuyau de distribution de lubrifiant ou d'huile (1) avec au moins une première demi-coque (3a, 3b, 3c, 3d, 3e, 3f) et un tuyau d'injection en bifurquant,
prépare une seconde demi-coque (4a, 4b, 4c, 4d, 4e, 4f) qui est conforme avec ladite première demi-coque (3a, 3b, 3c, 3d, 3e, 3f), et relie la région des surfaces de contact du joint entre les demi-coques (3a, 3b, 3c, 3d, 3e, 3f, 4a, 4b, 4c, 4d, 4e, 4f) par assemblage permanent.

8. Procédé selon la revendication 7, **caractérisé en ce que** les surfaces de joint entre les demi-coques (3a, 3b, 3c, 3d, 3e, 3f, 4a, 4b, 4c, 4d, 4e, 4f) sont soudées, notamment par soudage aux gaz chauds.

9. Procédé selon la revendication 7, **caractérisé en ce que** les demi-coques (3a, 3b, 3c, 3d, 3e, 3f, 4a, 4b, 4c, 4d, 4e, 4f) sont reliées par projection d'un matériau de joint dans le joint entre les demi-coques (3a, 3b, 3c, 3d, 3e, 3f, 4a, 4b, 4c, 4d, 4e, 4f).
